# EUROPÄISCHE PATENTANMELDUNG

(11) **EP 0 791 910 A2**
(43) Veröffentlichungstag der Anmeldung: **27.08.1997**
(21) Anmeldenummer: 97103305.5
(22) Anmeldetag: 28.02.1997
(51) Int. Cl.: G09F 9/00

(54) **Anzeigeeinrichtung, insbesondere zur Fahrgastinformation an Bahnsteigen**

(30) Priorität: 01.03.1996 DE 19607817
(71) Anmelder: mediatec Gesellschaft für multimediale Systemlösungen mbH, 90429 Nürnberg (DE)
(72) Erfinder: Lutze, Rainer, Dr.-Ing., 90491 Nürnberg (DE); Schuler, Burkhard, 90461 Nürnberg (DE)
(74) Vertreter: Schneck, Herbert, Dipl.-Phys., Dr.

(57) **Zusammenfassung**

Bei einer Anzeigeeinrichtung, insbesondere einer Anzeigeeinrichtung zur Fahrgastinformation an Bahnsteigen o. dgl., umfassend wenigstens einen über eine Steuereinrichtung zur Wiedergabe und Veränderung einer anzuzeigenden Information ansteuerbaren Flachbildschirm (4), ist vorgesehen daß der Flachbildschirm (4) durch wenigstens ein LC-Display (12) gebildet ist, welches durch eine Mehrzahl von hinter der Sichtseite des Flachbildschirms (4) angeordneten Leuchtmittel (8) einer Rückbeleuchtung beleuchtet wird, wobei wenigstens ein innerer, geschlossener Kühlkreislauf und ein äußerer, durch die Umgebungsluft des Zuganzeigers gebildeter Kühlkreislauf vorhanden sind, die über einen durch Gebläse regelbaren Wärmetauscher (9, 10) miteinander verbunden sind und der zur Abführung der von den Leuchtmitteln (8) erzeugten Wärme vorgesehen ist.

## Beschreibung

Die Erfindung richtet sich auf eine Anzeigeeinrichtung, insbesondere zur Fahrgastinformation an Bahnsteigen und dergleichen umfassend wenigstens einen über eine Steuereinrichtung zur Wiedergabe und Veränderung einer anzuzeigenden Information ansteuerbaren Flachbildschirm.

Anzeigeeinrichtungen der in Betracht stehenden Art eignen sich überall dort wo häufig wechselnde Informationen angezeigt werden müssen welche in gleichbleibender oder veränderbarer zeitlicher Abfolge benötigt werden und wobei darüber hinaus eine Individualisierung der Informationsanzeige in Abhängigkeit von besonderen Ereignissen möglich sein soll.

Ein typischer Anwendungsbereich ist die Fahrgastinformation an Bahnsteigen weshalb nachfolgend dieser beispielhafte Anwendungsbereich explizit angesprochen wird, ohne daß die Erfindung hierauf beschränkt wäre.

Ein besonderes Anforderungscharakteristikum bei Anneigeeinrichtungen für Fahrgastinformationen an Bahnsteigen besteht darin daß aufgrund der durch elektrische Lokomotiven verursachten elektrischen Störungen an die Störfestigkeit einer solchen elektronischen Einrichtung besonders strenge Maßstäbe angelegt werden, wobei andererseits aufgrund des beim Bremsen entstehenden Abriebs und Staubs auch hiergegen eine besondere Widerstandsfähigkeit erforderlich ist. Darüber hinaus sind solche im Freien aufgestellte Anzeigeeinrichtungen erheblichen Temperaturschwankungen ausgesetzt, so daß Vorkehrungen getroffen sein müssen daß eine einwandfreie Funktionsfähigkeit sowohl im Winter bei sehr niedrigen als auch im Sommer bei besonders hohen Temperaturen gewährleistet ist.

Eine weitere spezielle Anforderung resultiert daraus, daß die Fahrgastinformationen praktisch von jeder Position auf dem Bahnsteig aus gut erkennbar sein müssen so daß insbesondere bei Tageslicht mit einer hohen Leuchtdichte gearbeitet werden muß, die dazu führt, daß eine erhebliche Erwärmung eintritt, die gerade bei hohen Umgebungstemperaturen besondere Temperierungsvorkehrungen erforderlich macht.

Herkömmlicherweise erfolgt die Fahrgastinformation an Bahnsteigen mittels Fallblatt-Zuganzeiger. Auf diesen Fallblättem sind als Beschriftung die Züge vorgesehen, die auf einem bestimmten Bahnsteig entsprechend dem Fahrplan ankommen und abfahren wobei ein Aktualisieren durch das entsprechende Umblättern erreicht wird.

Diese bekannten Anzeigeeinrichtungen weisen demnach einen erheblichen Nachteil insoweit auf, als bei Fahrplanänderungen die einzelnen Fallblätter ausgetauscht oder ergänzt werden müssen. Dementsprechend besitzen diese bekannten Systeme nur eine sehr geringe Flexibilität, insbesondere dann, wenn es darum gehe den Fahrgästen irgendwelche Abweichungen vom Fahrplan in Form einer aussagefähigen Information zu vermitteln.

Hiervon ausgehend liegt der Erfindung die Aufgabe zugrunde, eine Anzeigeeinrichtung der in Betracht stehenden Art so auszugestalten daß sie einerseits den speziellen Anforderungen wie sie beispielsweise an Bahnsteigen auftreten, gerecht werden und andererseits eine weitgehende Informationsvermittlung einschließlich eventueller Stand- und Bewegtbildinformationen ermöglicht.

Diese Aufgabe wird erfindungsgemäß dadurch gelöst, daß der Flachbildschirm durch wenigstens ein LC-Display gebildet ist, welches durch eine Mehrzahl von hinter der Sichtseite des Flachbildschirms angeordneten Leuchtmitteln eine Rückbeleuchtung (z.B. Entladungslampen oder Leuchtstoffröhren) beleuchtet wird, wobei wenigstens ein innerer, geschlossener Kühlkreislauf und ein äußerer, durch die Umgebungsluft des Zuganzeigers gebildeter Kühlkreislauf vorhanden sind, die über einen Wärmetauscher miteinander verbunden sind und der zur Abführung der von der Rückbeleuchtung erzeugten Wärme vorgesehen ist. Vorteilhafterweise kann ein regelbares Gebläse vorgesehen sein, um den Luftstrom im Wärmetauscher und damit dessen Leistung zu steuern.

Mit Hilfe der erfindungsgemäß vorgesehenen Gruppe von Leuchtmitteln ist es möglich, einerseits die erforderliche Leuchtdichte zu realisieren andererseits durch die entstehende Verlustleistung hinreichend Wärme zu erzeugen, um die minimal notwendigen Betriebstemperaturen für die LC-Displays und Steuerrrechner auch in Gegenwart minimaler Umgebungstemperaturen des Zuganzeigers zu gewährleisten. Ein regelbarer Wärmetauscher und die Unterteilung des Zuganzeigers in unterschiedliche Klimazonen ermöglichen es weiter, die nicht zur Heizung benötigte Verlustleistung über ein Gebläse an die Umgebungsluft derart abzuführen, daß die maximal zulässige Betriebstemperatur für die LC-Displays und Steuerrechner nicht überschritten wird. Dementsprechend ist es möglich, eine solche Anordnung auch im Sommer bei hohen Temperaturen und großer Helligkeit zu betreiben. Dabei ermöglicht es ein ansteuerbares LC-Display, praktisch beliebige Informationen zu vermitteln, d. h. man muß nicht starr vorher beschriftete Anzeigenkombinationen abarbeiten.

Weiterhin sind in dem Zuganzeiger mindestens zwei Klimazonen A und B vorhanden, wobei sich insbesondere eine Klimazone A, in der das oder die LC-Displays enthalten sind, durch besonders eingeschränkte Maximaltemperaturen gegenüber der Umgebungsluft des Zuganzeigers und der anderen Klimazone B, die die Rückbeleuchtung und den Wärmetauscher enthält, sowie besonders eingeschränkten Minimaltemperaturen gegenüber der Umgebungsluft auszeichnet. Die Klimaführung in der Zone A wird dadurch ermöglicht, daß gegenüber der Umgebung des Zuganzeigers einerseits und der angrenzenden Klimazone B andererseits jeweils Grenzflächen mit unterschiedlichem Wärmeübergangswiderstand derart vorhanden sind, daß die Grenzfläche zwischen Klimazone A und B einen in einem definierten Verhältnis höheren Wärmeübergangswiderstand besitzt als die Grenzfläche zwischen Zone A und Umgebung des Zuganzeigers. Die Klimaführung in der Klimazone B wird durch den regelbaren Wärmetauscher in weiten Grenzen bestimmt. Bei hohen Umgebungstemperaturen kann durch den hohen Wärmeübergangswiderstand von der Klimazone B zu A sowie dem mit voller Leistung betriebenen Wärmetauscher infolge der resultierenden minimalen Differenztemperatur zwischen Klimazone B und A zugesichert werden, daß die vorgesehene Maximaltemperatur in der Klimazone A, die über der maximalen Umgebungstemperatur und unter der Maximaltemperatur in der Klimazone B liegt, nicht überschritten wird, da die über die Grenzfläche zwischen Klimazone B und A in die Klimazone A übergehende Wärme über die Grenzfläche zwischen Klimazone A und Umgebung nach außen entsprechend schneller abgeführt wird. Bei tiefen Umgebungstemperaturen kann durch den mit minimaler Leistung betriebenen Wärmetauscher der Wärmeübergang zwischen Klimazone B und A infolge einer hinreichend hohen resultierenden Differenztemperatur zwischen Klimazone B und A zugesichert werden daß trotz des höheren Wärmedurchganges durch die Grenzfläche zwischen Klimazone A und Umgebung (gegenüber der Grenzfläche zwischen Klimazone B und A) eine vorgesehene Minimaltemperatur in der Klimazone A erreicht wird.

In weiterer Ausgestaltung der Erfindung können elektronische Vorschaltgeräte zur Ansteuerung der Rückbeleuchtung in Abhängigkeit von der durch einen Helligkeitssensor gemessenen Umgebungshelligkeit vorgesehen sein. Hierdurch ist gewährleistet, daß ein unnötiger Energieverbrauch durch eine zu hohe Leuchtdichte in der Dämmerung oder bei Dunkelheit vermieden wird und außerdem wird die Lebensdauer der Leuchtmittel der Rückbeleuchtung verlängert.

Weiterhin kann vorgesehen sein, daß die Ansteuerung der Leuchtmittel so ausgelegt ist, daß bei maximaler Beleuchtung der LC-Displays eine Leuchtdichte von mindestens 500 cd/m² erreicht wird. Eine derartige Leuchtdichte ermöglicht auch bei großer Tageshelligkeit noch ein problemloses Erkennen der Anzeige.

Vorteilhafterweise sind zwei Flachbildschirme mit zwei gegeneinander um 180° versetzten Anzeigerichtungen vorgesehen wobei entweder jeweils zwei gegenüberliegende Einzelelemente der beiden Flachbildschirme durch ein zwischen ihnen in der Zentralachse (Längsachse) de Anzeigeeinrichtung angeordnetes, gemeinsames Leuchtmittel rückbeleuchtet werden, oder aber für eine Mehrzahl von Einzelelementen eines Flachbildschirms jeweils ein oder mehrere, gemeinsame Leuchtmittel zugeordnet sind, und wobei das Gebläse und die Wärmetauscheranordnung sich zwischen den Leuchtmitteln der Rückbeleuchtung in der Zentralachse der Anzeigevorrichtung befinden.

Anzumerken ist, daß der Flachbildschirm gebildet sein kann durch ein einziges LC-Display oder durch eine Mehrzahl von praktisch nahtlos sich aneinander anschließenden LC-Displays, wobei letztere Lösung bei kaum verminderter Anzeigequalität eine deutlich kostengünstigere Realisierung ermöglicht. Eine derartige Anordnung von LC-Displays ist in der deutschen Patentanmeldung No. 196 54 440.8 beschrieben.

Um den mechanischen Anforderungen bei der Aufstellung an Bahnsteigen gerecht zu werden ist ein staub- und feuchtigkeitsdichtes Gehäuse vorgesehen, wobei an dessen Oberseite parallel zur Längsachse der Anzeigevorrichtung ein Schwenkgelenk und an der Unterseite eine absperrbare Verriegelungseinrichtung angeordnet sind, um die Displays zu Wartungszwecken, z.B. Austausch der Leuchtmittel, hochklappen zu können.

Dabei kann wenigstens eine Gasdruckfeder vorgesehen sein, um die Displays im aufgeklappten Zustand endlagenstabil zu halten.

Die Frontplatte ist vorteilhafterweise aus kratzfestem, entspiegeltem Polycarbonat- oder Sicherheitsverbundglas ausgebildet, welches von der Innenseite her unter Freilassung der Ausschnitte für das wenigstens eine LC-Display bedruckt ist.

Die Leuchtmittel können so angeordnet sein bzw. das Gehäuse kann so ausgebildet sein, daß die Leuchtmittel außer den LC-Displays im Durchlichtverfahren auch unveränderbare Anzeigeeinheiten, wie z. B. eine Bahnsteignummer, durchleuchten.

Zur thermischen, luft-, staub- und feuchtigkeitsfesten Abschirmung und gegebenenfalls als Lichtdiffusor können die Flachbildschirme der Anzeigeeinrichtung nicht nur durch die Frontplatte von der Umgebung, sondern auch von der Rückbeleuchtung der Anzeigeeinrichtung durch eine transparente, temperaturteste Platte mit hohem Wärmedurchgangswiderstand (z.B. Doppelstegplatte aus Polycarbonat) abgeschlossen sein. Dabei kann das begrenzte Luftvolumen in den Flachbildschirmen vorteilsmäßig aus besonders getrockneter Luft ausgebildet werden, um eine Kondenswasserbildung in den Flachbildschirmen unter allen praktisch auftretenden Klimabedingungen gesichert auszuschließen. Des weiteren kann der regelmäßig notwendige Austausch der Leuchtmittel dann nach Hochklappen der Flachbildschirme auch ohne Gefahr der Verstaubung oder mechanischen bzw. elektrostatischen Beschädigung der LC-Displays durchgeführt werden.

Weiterhin kann in der Anzeigeeinrichtung ein zusätzlicher Steuerrechner für Temperatur- und Leuchtstärkeregelung vorgesehen sein, der sich gegenüber dem oder den anderen, vorzugsweise vernetzten Steuerungsrechnern in der Anzeigeeinrichtung, die die Informationsdarstellung auf dem Flachbildschirm steuern, durch seinen klimamäßig (Temperatur, Feuchtigkeit) besonders erweiterten Einsatzbereich auszeichnet. Unter ungünstigen klimatischen Umständen (starke Auskühlung durch lange Betriebspausen, Kondenswasserbildung durch langes Öffnen der Anzeigeeinrichtung) kann dann ein Betriebsstart der Anzeigeeinrichtung derart erfolgen, daß zunächst nur der Steuerungsrechner für die Temperatur- und Leuchtstärkeregelung in Betrieb genommen wird, und dieser durch Einschalten der Rückbeleuchtung (mit voller Leistung) die Anzeigeeinrichtung zunächst soweit aufheizt, daß die minimale Betriebstemperatur für den /die anderen Steuerungsrechner und die Flachbildschirme erreicht wird und eventuell gebildetes Kondenswasser sicher verdampft ist. Erst dann werden der/die weitere(n) Steuerungsrechner, die Flachbildschirme sowie das Gebläse des Wärmetauschers durch den Steuerungsrechner für die Temperatur- und Leuchtstärkeregelung in Betrieb genommen. Umgekehrt, bei sehr hohen Temperaturen (etwa infolge Aufheizung durch Sonneneinstrahlung) wird durch den Steuerungsrechner für die Temperatur- und Leuchtstärkeregelung zunächst nur das Gebläse des Wärmetauschers mit Höchstleistung in Betrieb genommen, und die Temperatur in der Anzeigeeinrichtung in der Folge soweit abgesenkt, bis die maximale Betriebstemperatur des/der weiteren Steuerungsrechner und der Flachbildschirme unterschritten ist und diese gesichert in Betrieb genommen werden können.

Für eine Ansteuerung von außen, z. B. von einem Stellwerk aus, kann ein Lichtwellenleiterkabel vorgesehen sein, welches einerseits die erforderliche Informationsdichte übertragen kann und andererseits gegen elektro-magnetische Störungen im Bahnbereich unempfindlich ist und Leitungslängen bis zu mehreren Kilometern ohne zwischengeschaltete Verstärker ermöglicht.

Der Wärmetauscher kann durch wenigstens zwei mit Rippenanordnungen versehene Kühlkanäle gebildet sein, durch welche die Umgebungsluft mittels Axiallüfter geblasen wird.

Schließlich ist vorteilhafterweise noch eine Schaltungsanordnung zum Absenken der Helligkeit bzw. Abschalten der Leuchtmittel der Rückbeleuchtung bei Überschreitung einer maximal zulässigen Temperatur trotz Vollbetriebes der Kühleinrichtungen vorgesehen. Diese Schaltungsanordnung kann über den zusätzlichen Steuerrechner zur Temperatur- und Leuchtstärkeregelung angesteuert werden. Hierdurch werden hitzebedingte Schädigungen bei extremen Außentemperaturen bzw. Verunreinigung der Kühlkanäle bzw. Ausfall der Axiallüfter zuverlässig vermieden.

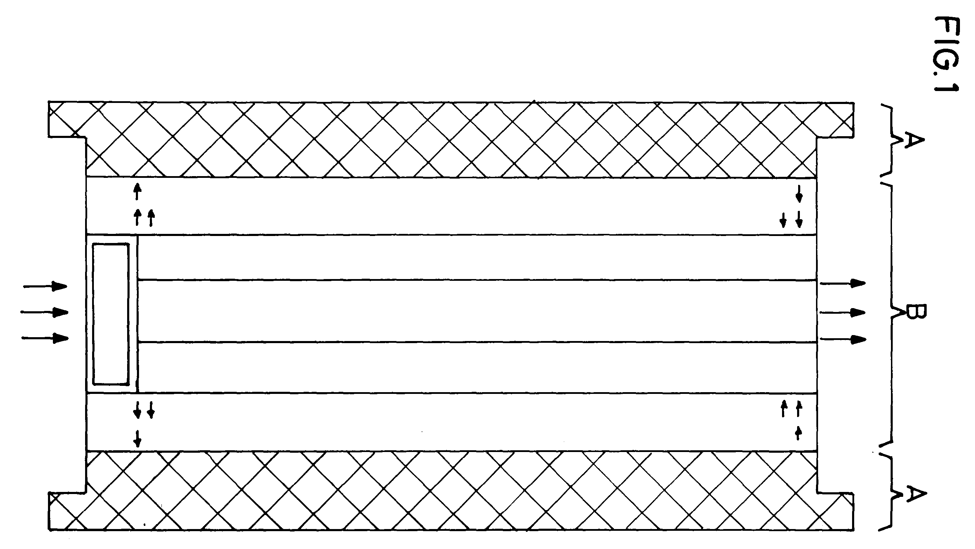

Nachfolgend wird die Erfindung anhand eines bevorzugten Ausführungsbeispieles in Verbindung mit der Zeichnung näher beschrieben. Dabei zeigen
Fig. 1 eine schematische Darstellung der verschiedenen Klimazonen,

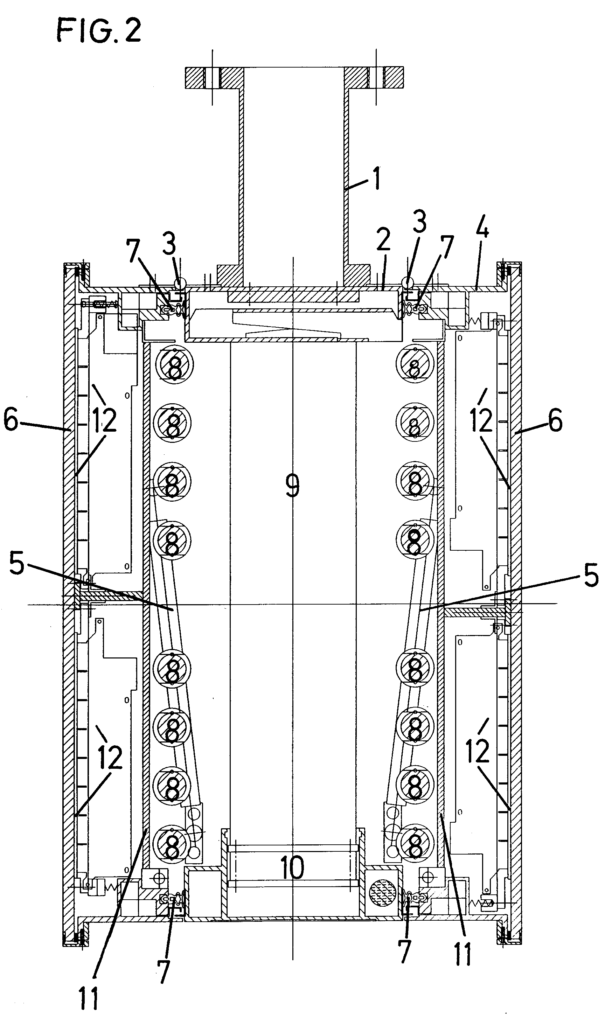

Fig. 2 einen Querschnitt durch die Anzeigeeinrichtung,

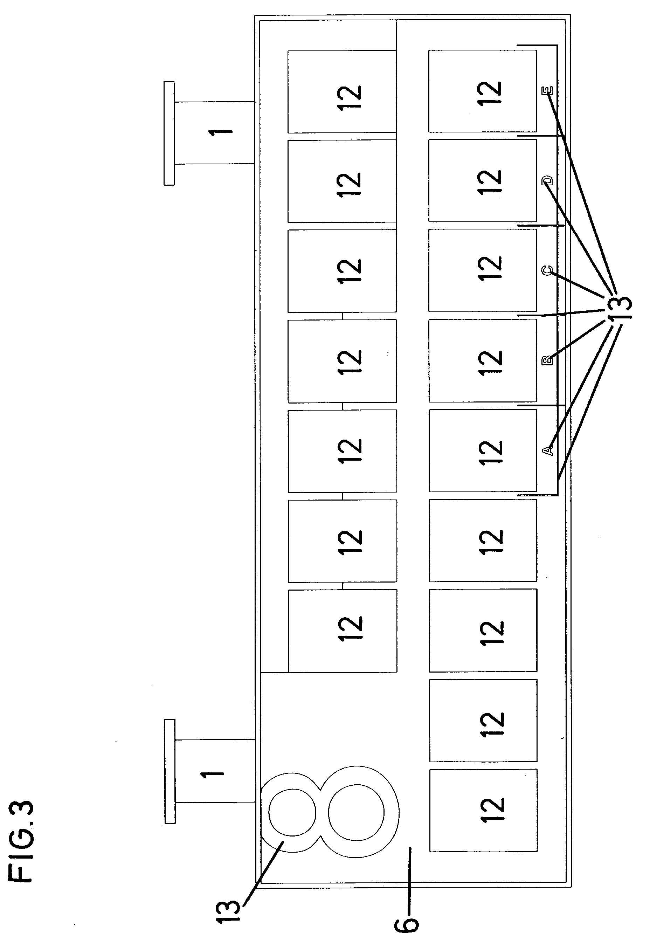

Fig. 3 eine Aufsicht der Anzeigeeinrichtung und

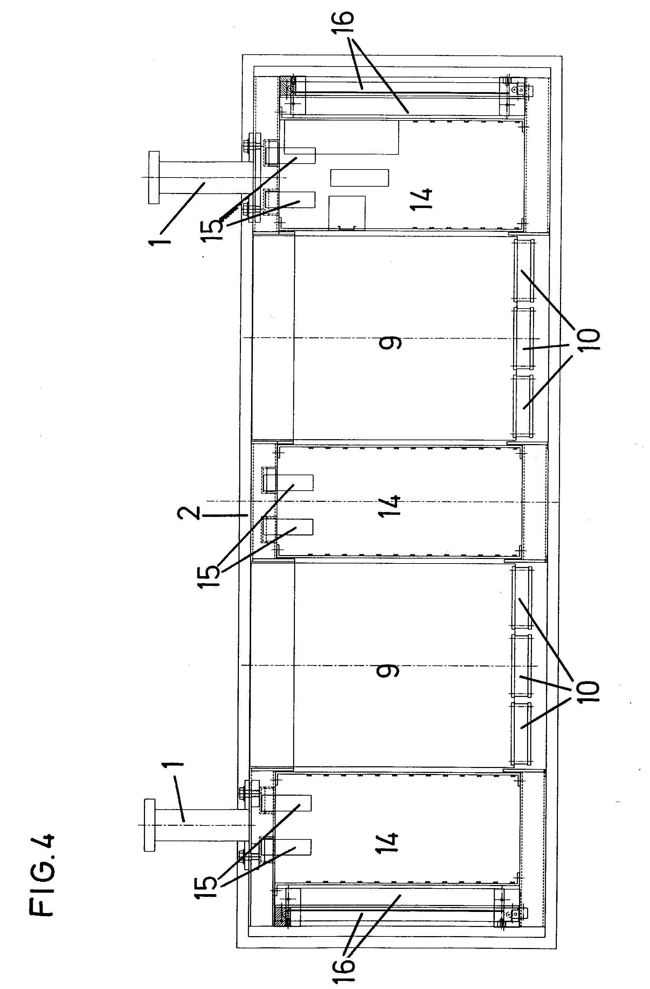

Fig. 4 einen Längsschnitt der Anzeigeeinrichtung.

Der Zentralkorpus des Anzeigers 2 ist an einer Abhängung 1 befestigt und über die oberen Schwenkgelenke 3 mit den beiden Flachbildschirmen 4 verbunden, die über die Gasdruckfedern 5 im aufgeklappten Zustand endlagenstabil gehalten werden. Die Dichtungseinrichtungen 7 schließen Flachbildschirme und Zentralkorpus in geschlossenem Zustand staub- und feuchtigkeitsdicht gegeneinander ab. Die Flachbildschirme 4 werden nach außen durch die transparenten Frontplatten 6 aus Polycarbonat- oder Sicherheitsverbundglas hinter denen die LC-Displays 12 verspannt sind, und zuin Zentralkorpus des Zuganzeigers hin durch die transparenten Doppelstegplatten 11 begrenzt. Der Zentralkorpus 2 besteht aus der Beleuchtungseinrichtung mit der Schaltungsanordnung zur Steuerung der Helligkeit der Flachbildschirme 16 und den Leuchtstoffröhren 8, dem Wärmetauscher mit Kühlkanälen 9 und dem darunter angeordneten Gebläse 10. Die Beleuchtungseinrichtung mit den Leuchtmitteln 8 kann auch unveränderte Anzeigeelemente wie Bahnsteignummern 13 beleuchten. Der/die Steuerrechner 14 sind zwischen den einzelnen Kühlkanälen 9 des Wärmetauschers angeordnet. Zur Zuführung der Anschlußkabel zu den LC-Displays über das obere Schwenkgelenk sind entsprechende Kabelaufnahmen 15 vorhanden.

## Patentansprüche

1. Anzeigeeinrichtung, insbesondere Anzeigeeinrichtung zur Fahrgastinformation an Bahnsteigen o. dgl., umfassend wenigstens einen über eine Steuereinrichtung zur Wiedergabe und Veränderung einer anzuzeigenden Information ansteuerbaren Flachbildschirm, dadurch gekennzeichnet, daß der Flachbildschirm (4) durch wenigstens ein LC-Display (12) gebildet ist, welches durch eine Mehrzahl von hinter der Sichtseite des Flachbildschirms angeordneten Leuchtmitteln (8) einer Rückbeleuchtung wie Entladungslampen, Leuchtstoffröhren o.dgl. beleuchtet wird, wobei wenigstens ein innerer, geschlossener Kühlkreislauf und ein äußerer, durch die Umgebungsluft des Zuganzeigers gebildeter Kühlkreislauf vorhanden sind, die über einen durch Gebläse regelbaren Wärmetauscher (9, 10) miteinander verbunden sind und der zur Abführung der von den Leuchtmitteln (8) erzeugten Wärme vorgesehen ist.

2. Anzeigeeinrichtung nach Anspruch 1, dadurch gekennzeichnet, daß wenigstens zwei Klimazonen vorhanden sind, deren eine, die das oder die LC-Displays enthält, sich durch besonders eingeschränkte Maximaltemperaturen gegenüber der Umgebungsluft bzw. den anderen Klimazonen sowie besonders eingeschränkte Minimaltemperaturen gegenüber der Umgebungsluft auszeichnet.

3. Anzeigeeinrichtung nach Anspruch 2, dadurch gekennzeichnet, daß eine Klimazone mit zugesicherten Minimal- und Maximaltemperaturen für das bzw. die enthaltenen LC-Displays und eine Regeleinrichtung vorhanden sind, die durch Steuerung der Differenztemperatur zwischen Klimazone und benachbarten Klimazonen im Zuganzeiger in Abhängigkeit von der Umgebungstemperatur des Zuganzeigers die Einhaltung der Temperaturgrenzwerte für die Klimazone gewährleistet.

4. Anzeigeeinrichtung nach Anspruch 1, dadurch gekennzeichnet, daß zwei Flachbildschirme mit zwei gegeneinander um 180° versetzten Anzeigerichtungen vorgesehen sind, daß für jeden Flachbildschirm (4) entweder jeweils zwei gegenüberliegende Einzelelemente der Flachbildschirme (12) durch ein zwischen ihnen, in der Zentralachse (Längsachse) der Anzeigeeinrichtung angeordnetes, gemeinsames Leuchtmittel rückbeleuchtet werden, oder aber für eine Mehrzahl von Einzelelementen des jeweiligen Flachbildschirms ein oder mehrere, gemeinsame Leuchtmittel (8) vorgesehen sind, und daß das Gebläse (10) und die Wärmetauscheranordnung (9) sich zwischen den Leuchtmitteln der Rückbeleuchtung in der Längsachse der Anzeigeeinrichtung befinden.

5. Anzeigeeinrichtung nach Anspruch 1, dadurch gekennzeichnet, daß ein staub- und feuchtigkeitsdichtes Gehäuse (2, 4, 6, 7) vorgesehen ist, wobei an der Oberseite parallel zur Längsachse der Anzeigeeinrichtung verlaufend ein Schwenkgelenk (3) und an der Unterseite eine absperrbare Verriegelungseinrichtung angeordnet sind, um die Flachbildschirme zu Wartungszwecken hochklappen zu können.

6. Anzeigeeinrichtung nach Anspruch 5, dadurch gekennzeichnet, daß wenigstens eine Gasdruckfeder (5) vorgesehen ist, um die Flachbildschirme im aufgeklappten Zustand endlagenstabil zu halten.

7. Anzeigeeinrichtung nach Anspruch 1, dadurch gekennzeichnet, daß sie eine Frontplatte aus kratzfestem, entspiegeltem Polycarbonat- oder Sicherheitsverbundglas (6) aufweist, welches von der Innenseite her unter Freilassung der Ausschnitte für das wenigstens eine LC-Display bedruckt ist.

8. Anzeigeeinrichtung nach Anspruch 1, dadurch gekennzeichnet, daß die Leuchtmittel der Rückbeleuchtung so angeordnet sind, daß sie außer die LC-Displays (12) auch im Durchlichtverfahren unveränderbare Anzeigeeinheiten, wie z. B. eine Bahnsteignummer (13), durchleuchten.

9. Anzeigeeinrichtung nach Anspruch 1, dadurch gekennzeichnet, daß zur thermischen, luft-, staub- und feuchtigkeitsfesten Abschirmung die Flachbildschirme (4) nicht nur von der Umgebung her durch die Frontplatte (6), sondern zusätzlich von der Rückbeleuchtung der Anzeigeeinrichtung (8) durch eine transparente, temperaturfeste Platte mit hohem Wärmedurchgangswiderstand (11) abgeschlossen sind und für das abgeschlossene Luftvolumen in dem Flachbildschirm besonders getrocknete Luft verwendet werden kann, für die eine Kondenswasserbildung unter allen praktisch auftretenden Klimabedingungen ausgeschlossen werden kann.

10. Anzeigeeinrichtung nach Anspruch 1, dadurch gekennzeichnet, daß hinter den Flachbildschirmen bzw. zwischen zwei um 180° gegeneinander gerichteten Flachbildschirmen ein Steuerungsrechner bzw. eine Mehrzahl vernetzter Steuerungsrechner (14) angeordnet ist.

11. Anzeigeeinrichtung nach Anspruch 10, dadurch gekennzeichnet, daß ein zusätzlicher Steuerrechner für Temperatur- und Leuchtstärkeregelung mit besonders klimamäßig (Temperatur, Feuchtigkeit) erweitertem Einsatzbereich vorgesehen ist.

12. Anzeigeeinrichtung nach Anspruch 11, dadurch gekennzeichnet, daß die Rückbeleuchtung (8) und der Wärmetauscher (9) mit dem Gebläse (10) von dem Steuerungsrechner für die Temperatur- und Leuchtstärkeregelung zum Betriebsstart unter ungünstigen klimatischen Bedingungen verwendet werden, so daß einerseits bei besonders kalten und/oder feuchten Umgebungsbedingungen zunächst nur der Steuerungsrechner für die Temperatur- und Leuchtstärkeregelung in Betrieb genommen wird, und dieser durch Einschalten der Rückbeleuchtung (8) (mit voller Leistung) die Anzeigeeinrichtung soweit aufheizt, daß die minimale Betriebstemperatur für den/die anderen Steuerungsrechner zur Informationsdarstellung auf den Flachbildschirmen (4) sowie für die Flachbildschirme erreicht wird und eventuell gebildetes Kondenswasser sicher verdampft wird und erst dann der/die weitere(n) Steuerungsrechner, die Flachbildschirme sowie das Gebläse des Wärmetauschers (10) durch den Steuerungsrechner für die Temperatur- und Leuchtstärkeregelung in Betrieb genommen werden, andererseits bei sehr hohen Temperaturen durch den Steuerungsrechner für die Temperatur- und Leuchtstärkeregelung zunächst nur das Gebläse des Wärmetauschers mit Höchstleistung in Betrieb genommen wird, und die Temperatur in der Anzeigeeinrichtung in der Folge durch den Wärmetauscher (9) soweit abgesenkt wird, bis die maximale Betriebstemperatur des/der weiteren Steuerungsrechner und der Flachbildschirme unterschritten ist und diese gesichert in Betrieb genommen werden können.

13. Anzeigeeinrichtung nach Anspruch 1, dadurch gekennzeichnet, daß für die Ansteuerung von außen ein Lichtwellenleiterkabel vorgesehen ist.

14. Anzeigeeinrichtung nach Anspruch 1, dadurch gekennzeichnet, daß der Wärmetauscher durch wenigstens zwei mit Rippenanordnungen versehene Kühlkanäle (9) gebildet ist, durch welche die Umgebungsluft mittels Axiallüfter (10) geblasen wird.

15. Verfahren zur Klimaführung in einer Anzeigeeinrichtung, dadurch gekennzeichnet, daß der Betriebsstart unter ungünstigen klimatischen Bedingungen derart erfolgt, so daß einerseits bei besonders kalten und/oder feuchten Umgebungsbedingungen zunächst nur ein Steuerungsrechner zur Temperatur- und Leuchtstärkeregelung mit klimamäßig besonders erweitertem Einsatzbereich in Betrieb genommen wird, und dieser durch Einschalten der Rückbeleuchtung (8) (mit voller Leistung) die Anzeigeeinrichtung soweit aufheizt, daß die minimale Betriebstemperatur für den/die anderen Steuerungsrechner zur Informationsdarstellung auf den Flachbildschirmen (4) sowie für die Flachbildschirme erreicht wird und eventuell gebildetes Kondenswasser sicher verdampft wird und erst dann der/die weitere(n) Steuerungsrechner, die Flachbildschirme sowie das Gebläse des Wärmetauschers (10) durch den Steuerungsrechner mit erweitertem Einsatzbereich in Betrieb genommen werden, andererseits bei sehr hohen Temperaturen durch den Steuerungsrechner mit erweitertem Einsatzbereich zunächst nur das Gebläse des Wärmetauschers mit Höchstleistung in Betrieb genommen wird, und die Temperatur in der Anzeigeeinrichtung in der Folge durch den Wärmetauscher (9) soweit abgesenkt wird, bis die maximale Betriebstemperatur des/der weiteren Steuerungsrechner und der Flachbildschirme unterschritten ist und diese gesichert in Betrieb genommen werden können.

16. Verfahren zur Klimaführung in einer Anzeigeeinrichtung nach Anspruch 15, dadurch gekennzeichnet, daß wenigstens zwei, aneinander angrenzende Klimazonen vorhanden sind, von denen für eine dieser Klimazonen Minimal- und Maximaltemperaturen derart zugesichert werden können, daß durch Steuerung der Differenztemperatur zur Umgebung und der anderen Klimazone, die eine durch die Rückbeleuchtung (8) der Anzeigeeinrichtung gebildete starke Wärmequelle sowie eine durch Wärmetauscher (9) und Gebläse (10) gebildete Kühlungseinrichtung enthält, durch einen Steuerungsrechner zur Temperatur- und Leuchtstärkeregelung mit besonders klimamäßig erweitertem Einsatzbereich diese Minimal- und Maximaltemperaturen nicht über- und unterschritten werden können.

17. Verfahren zur Klimaführung in einer Anzeigeeinrichtung nach Anspruch 16, dadurch gekennzeichnet, daß eine Reduzierung der Helligkeit der Leuchtmittel der Rückbeleuchtung bzw. ein Abschalten der Rückbeleuchtung durch den Steuerungsrechner zur Temperatur- und Leuchtstärkeregelung mit klimamäßig erweitertem Einsatzbereich erfolgt, wenn trotz Maximalbetriebs der Kühleinrichtungen (9, 10) der Anzeigeeinrichtung die maximale Betriebstemperatur für den/die Steuerungsrechner zur Informationsdarstellung auf den Flachbildschirmen (4) oder für die Flachbildschirme überschritten wird.
